# EUROPEAN PATENT APPLICATION

(11) **EP 1 715 719 A2**
(43) Date of publication of application: **25.10.2006**
(21) Application number: 06008124.7
(22) Date of filing: 19.04.2006
(51) Int. Cl.: H04R 5/033

(54) **Cable-connectable stereo headset**

(30) Priority: 19.04.2005 KR 20050032226
(71) Applicant: Samsung Electronics Co., Ltd., Suwon-si, Gyeonggi-Do (KR)
(72) Inventor: Cho, Min-Won, Yeongtong-gu Suwon-si Gyeonggi-Do (KR); Hwangbo, Sang-Moo, Yeongtong-gu Suwon-si Gyeonggi-Do (KR)
(74) Representative: Grünecker, Kinkeldey, Stockmair & Schwanhäusser Anwaltssozietät

(57) **Abstract**

Disclosed is a cable-connectable stereo headset. The cable-connectable stereo headset includes a first headphone (101) containing a Bluetooth® enabled module (101a) and a second headphone (201) connected to the first headphone (101) by a cable (231). In a voice communication mode, the second headphone (201) may be kept separate from the first headphone (101) while only the first headphone (101) is used, thereby providing for convenient voice communication. Further, in a music listening mode, the second headphone (201) is connected to the first headphone (101) again to provide stereo sound. The first headphone has a communication on/off key which can enable voice communication even when the portable terminal is not being directly operated when answering a call. The first headphone further includes function keys for replaying and stopping sound medium, controlling volume of the sound medium and selecting music. Thus, a multimedia device (10) including a portable terminal can be conveniently operated by using the first headphone even if the multimedia device is not being directly operated.

## Description

### BACKGROUND OF THE INVENTION

### 1. Field of the Invention

The present invention relates to a headset, and more particularly to a cable-connectable stereo headset, which includes a pair of headphones one of which can perform wireless communication with sound devices and cooperate with the other mono headphone to provide stereo sound, while voice communication is conveniently carried out using a portable terminal.

### 2. Description of the Related Art

Generally, the term "headset" refers to an auxiliary device capable of providing sounds into which sound signals output from a sound device are converted to a user and transferring electric signals into which the user's voice is converted to the sound device or a portable terminal, in order to record the voice or to allow the user to communicate with others.

Traditionally, the primary users of headsets have been telemarketers, consultants and public relations personnel, as well as persons talking on the Internet. Such a headset includes a speaker for outputting sound and a microphone for converting a user's voice into electric signals, which is fabricated in a single body shape.

Meanwhile, as the use of portable terminals providing mobile communication services is gradually expanding, the use of hands-free devices such as headsets, for the portable terminal is increasing. Basic hands-free devices have provided only a function for voice communication using the portable terminal.

The mobile communication services are gradually expanding to multimedia areas as communication technologies and equipment continue to develop. Thus, functions of the portable terminals are rapidly growing. Further, since technology for compressing music files into MP3 files has been developed, the portable terminals can be used as multimedia devices for playing music files and moving picture files, as well as performing voice communication.

However, most hands-free devices for portable terminals are limited to voice communication. Some of these devices are manufactured as a pair of earphones performing stereo functions when music files are played. Since this type of hands-free device is generally connected to the portable terminal by cables, voice communication becomes inconvenient. Furthermore, when using a portable terminal for multimedia functions, even though a user employs a hands-free device, the user must operate the portable terminal in order to play music files even when the user does not carry out voice communication. Thus, the user cannot efficiently use the hands-free device.

### SUMMARY OF THE INVENTION

Accordingly, the present invention has been made to solve the above-mentioned problems occurring in the prior art, and an object of the present invention is to provide a cable-connectable stereo headset capable of outputting mono or stereo sounds according to a user's selection.

Another object of the present invention is to provide a cable-connectable stereo headset capable of carrying out voice communication using one headphone when a user communicates with a portable terminal and providing stereo sounds by using two mono headphones according to a user's selection.

Still another object of the present invention is to provide a cable-connectable stereo headset with which a user can play and stop a sound medium, control sound volume and select music, without operating a sound device including a portable terminal having a multimedia function.

In order to accomplish these objects, there is provided a cable-connectable stereo headset including a first headphone including a speaker unit, for converting sound signals received from a device for playing a sound medium into sounds and for outputting the sounds; and a second headphone including a speaker unit and selectively connected to the first headphone by a cable, for outputting a portion of the sounds, thereby accomplishing mono sound by using the first headphone according to a user's selection or achieving stereo sound by using the first and second headphones.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view showing a cable-connectable stereo headset according to a first embodiment of the present invention;
FIG. 2 is a perspective view showing a first headphone of the cable-connectable stereo headset according to the first embodiment of the present invention shown in FIG. 1;
FIG. 3 is a perspective view showing a cable-connectable stereo headset according to a second embodiment of the present invention; and
FIG. 4 is a block diagram illustrating an operation of the cable-connectable stereo headset according to the first embodiment of the present invention shown in FIG. 1.

### DETAILED DESCRIPTION OF THE PREFERRED EMBODIMENT

Hereinafter, preferred embodiments of the present invention will be described in detail with reference to the accompanying drawings. In the following description of the present invention, a detailed description of known functions and configurations incorporated herein will be omitted for the sake of clarity.

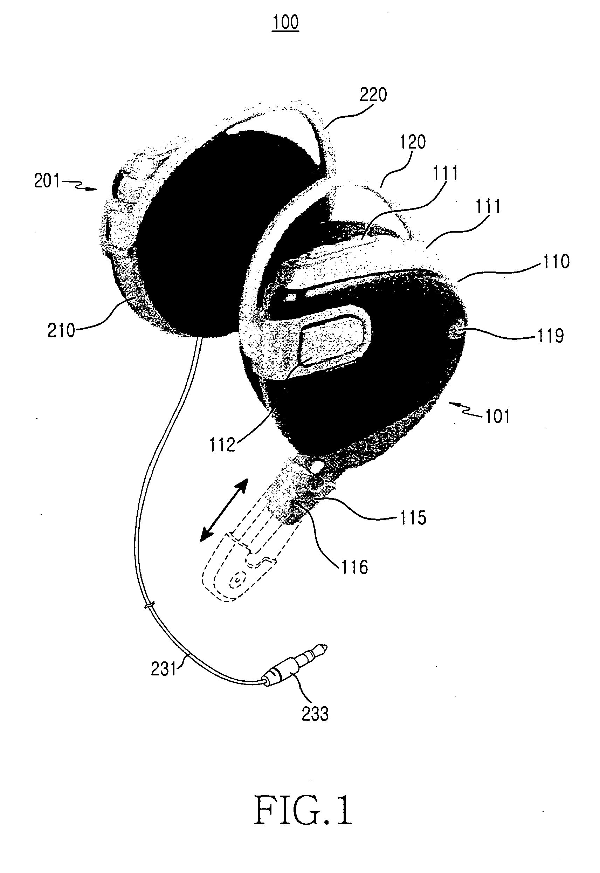

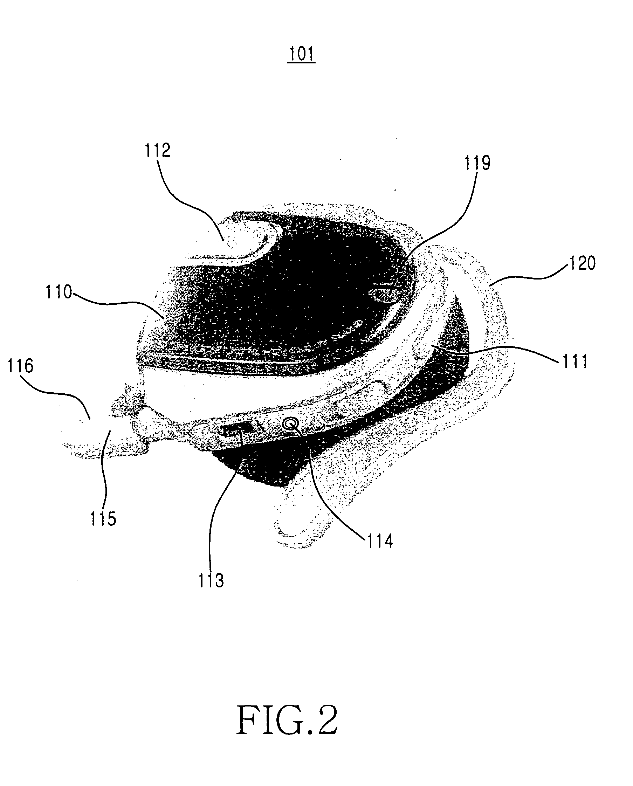

As shown in FIGS. 1 and 2, a cable-connectable stereo headset 100 according to a first embodiment of the present invention includes a pair of mono headphones 101 and 201. A first headphone 101 contains a module enabled by Bluetooth®, which is a registered trademark of Bluetooth SIG, Inc., and can perform wireless communication with a sound device such as an audio component, or a device including a portable terminal for transmitting and receiving sound signals. A second headphone 201 is selectively connected to the first headphone 101 by a cable. The second headphone 201 receives a portion of the sound signals generated from the sound device for transmitting sound signals by way of the first headphone 101.

The mono headphones 101 and 201 include housings 110 and 210 and a wearable frames 120 and 220, respectively.

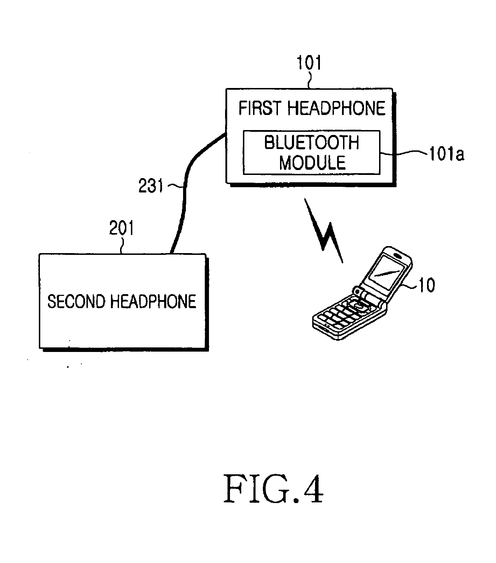

The housing 110 of the first headphone 101 contains a speaker for converting sound signals received from a sound device transmitting the sound signals into sounds and outputting the sounds, and the Bluetooth® enabled module 101a (see FIG. 4) for performing wireless local area communication. A portion of the housing 110 from which the sounds are output and which contact the user's ears are covered with fibrous wrapping to improve comfort.

The housing 210 of the second headphone 201 contains a speaker for converting the received sound signals into sounds and outputting the sounds. The second headphone 201 includes a cable 231 that extends from the housing 201 thereof and is selectively connected to the first housing 110 of the first headphone 101. The cable 231 has a jack plug 233 at an end thereof. The jack plug 233 is inserted into a jack hole 114 formed in the first housing 110 of the first headphone 101.

Each of the headphone frames 120 and 220 has at least one end integrated with the housings 110 and 210, which surrounds at least a portion of a periphery of the housings 110 and 210. The integrated end of each of the headphone frames 120 and 220 pivots about a rotating axis so that a user can conveniently wear the headphones 101 and 201. Meanwhile, the headphone frames 120 and 220 can be manufactured of an elastic material to facilitate user comfort, and the end of each headphone frame 120 and 220 can be fixedly coupled with the housings 110 and 210, respectively.

The first headphone 101 includes function keys 111 for operating a sound device capable of transmitting sound signals, such as a play key, a stop key, a volume control key, a music selection key and the like, and an on/off key 112 for performing a function of communication with a portable terminal. The function keys 111 and the on/off key 112 are installed on the housing 110.

The function keys 111 for performing the play and stop of the sound device are arranged along a peripheral surface of the housing 110. The function keys 111 preferably have different shapes so that a user can recognize the function of each key by touch even though the user cannot see the keys. Since the first headphone 101 has the function keys 111, a user of a device such as a sound device or a portable terminal having a Bluetooth® enabled module connectable with the Bluetooth® enabled module 101a of the first headphone 101, can play and stop the device, control volume of the device and select music by using the first headphone 101.

The communication on/off key 112 is installed on an exterior side of the housing 110 in order to distinguish the on/off key 112 from the function keys 111.

Only one function key 111 may be installed in the housing 110, to which a number of key values are assigned to make the first headphone small and light. When the key values are assigned to the function key, the function key can be set up so that a variety of signals are generated according to operation numbers or continuous use of the function key. Thus, the number of keys to be installed in the first headset 101 can be reduced, thereby accomplishing the reduced size and weight of the first headphone.

Further, a transmitter 115 is installed on the first headphone 101 in order to provide a voice communication function. The transmitter 115 extends from a portion of the peripheral surface of the housing 110, which contains a microphone. A microphone hole 116 is formed on a portion of an exterior surface of the transmitter 115 so that the user's voice can approach the microphone contained in the transmitter 115. The microphone of the transmitter 115 converts the user's voice into electric signals and then transfers the voice signals through the Bluetooth® enabled module 101a of the first headphone 101 to the portable terminal. The portable terminal receives the voice signals and then transmits the voice signals to a mobile communication service provider or another user. Thereby, the user can perform voice communication in a mono mode by using the first headphone 101 wirelessly connected to the portable terminal.

Meanwhile, the transmitter 115 can effectively convert the user's voice into electric signals when the user's mouth is closer to the transmitter 115. Therefore, the transmitter 115 retractably extends from the housing 110 in order to be closer to the user's mouth. Although not shown, since the transmitter 115 extends in a lengthwise direction, a guide recess is formed in the housing 110 to receive the transmitter 115 so that the user can selectively extract the transmitter 115 towards the housing 110..

As the function keys 111 and the on/off key 112 are provided on the housing 110 of the first headphone 101, the user can perform voice communication by operating the first headphone 101 wirelessly connected with the portable terminal.

The housing 110 is provided with an internal battery in order to supply electricity to operate the speaker and the Bluetooth® enabled module 101a contained therein. In addition, the housing 110 has a jack connector 113 to connect an external electric source to the first headphone 101. Thus, after using the first headphone, the user can charge the internal battery contained in the housing 110 of the first headphone 101.

Further, the first headphone 101 has a luminous element 119 mounted on the housing 110 thereof. The luminous element 119 flickers on and off to correspond to a sensitivity of signals transmitted to and received from the sound device providing sound signals or the portable terminal. The luminous element 119 flickers at a time interval when the reception of the signals is high, and is off when there are no sound signals to be converted into sounds. Meanwhile, the luminous element 119 may be set up to display the turn-on/off status of the first headphone 101.

The function and on/off keys 111 and 112 may be installed only in the first headphone 101. Further, the second headphone 201 need not have a separate internal battery because it is connected with the first headphone 101 by a cable 231. However, if an increase in a use time of the stereo headset 100 is desired, a battery can be installed in the second headphone 201. The second headphone 201 can be connected to the first headphone 101 while the internal battery of the first headphone 101 is being charged. The second headphone 201 is associated with the first headphone 101 to constitute the stereo headset.

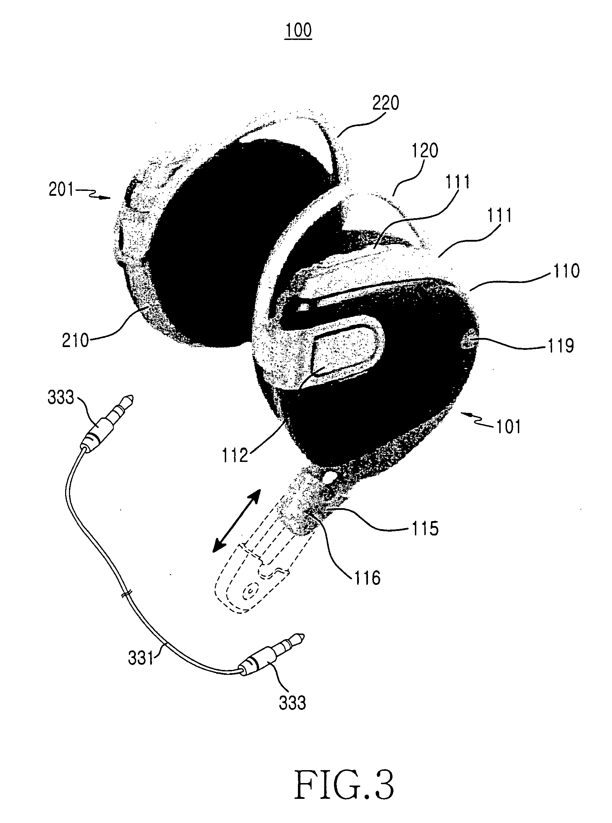

FIG. 3 is a perspective view showing a cable-connectable stereo headset according to a second embodiment of the present invention. The stereo headsets of the first and second embodiments have the same structure, except that both of the first and second headphones in the second embodiment have a jack hole formed therein and a cable 331 has jack plugs 333 installed at both ends thereof. That is, according to the second embodiment of the present invention, the cable 331 can be separated from the first and second headphones 101 and 201.

The cable 331 is manufactured separately from the second headphone 201. Therefore, the cable 331 is separated from the second headphone 201 when the cable is not in use, while the cable 331 connects the second headset 201 to the first headset 101 when in use.

The second embodiment of the present invention is particularly convenient for a user who mainly performs voice communication with the headset 100 and a portable terminal but rarely listens to music with the headset 100. Further, the second headphone 201 can be manufactured such that the cable can be wound in the housing 210 to facilitate portability of the cable 331. The cable 331 is manufactured separately from the second headphone 201 to prevent a size increase of the second headphone 201 and to provide convenience for the users who wind and carry it.

FIG. 4 is a block diagram illustrating an operation of the cable-connectable stereo headset 100 according to the first embodiment of the present invention shown in FIG. 1. A portable terminal 10 is used as a device for transmitting sound signals. The portable terminal 10 performs a mobile communication service such as voice communication and plays a sound medium such as an MP3 file.

The cable-connectable stereo headset 100 can communicate with the portable terminal 10 via the first headphone 101. The second headphone 201 is connected to the first headphone 101 by the cable 231, so that the first and second headphones 101 and 201 convert some of the sound signals received from the portable terminal 10 into sounds and output the sounds to realize stereo sound.

Referring to FIG. 4, the first headphone 101 maintains the communication with the portable terminal while either converting the sound signals received from the portable terminal 10 into sounds and providing the sounds to the user, or converting the user's voice into electric signals and transmitting the electric signals to the portable terminal 10. Meanwhile, the second headphone 201 receives a portion of the sound signals from the portable terminal 10 by way of the first headset 101, converts a portion of the sound signals into sounds and delivers the sounds to the user.

The user can perform voice communication through the portable terminal 10 by using the first headphone 101 even when the portable terminal 10 is not being operated. The user also can use the second headphone 201 to perform voice communication.

When playing music with the portable terminal 10, the user enjoys stereo sounds using both the first and second headphones 101 and 201. Further, since the user can play the sound medium, stop the play of the sound medium and select the sound medium by using the function keys 111 on the first headphone 101, the user can conveniently listen to and control operation of the music even though the portable terminal 10 is not being operated.

As described above, the second headphone 201 of the cable-connectable stereo headset is connected to the first headphone by a cable, such that the second headphone is separated from the headset when only the first headphone is used in a communication mode. Further, the first and second headphones are connected in order to realize stereo sounds, so that the user can enjoy an improved sound when listening to music. In addition, the first headphone includes a communication on/off key that can be used to perform communication even when the portable terminal is not being directly operated. Furthermore, since the first headphone includes the function keys for playing and stopping the sound medium, controlling the volume of the sound device and selecting music, the multimedia device or the portable terminal can be operated by using the first headphone even though the multimedia device is not being directly operated. Accordingly, the multimedia device is conveniently operated.

Additionally, the first headphone 101 may be connected to the sound device or the portable terminal by a wire including a cable within the scope of the present invention.

While the invention has been shown and described with reference to certain preferred embodiments thereof, it will be understood by those skilled in the art that various changes in form and details may be made therein without departing from the scope of the invention as defined by the appended claims.

## Claims

1. A cable-connectable stereo headset comprising:
a first headphone (101) for receiving sound signals from a device (10) for playing a sound medium, converting said sound signals into sound and outputting same, the first headphone (101) including a speaker unit (115, 116), and
a second headphone (201) for outputting at least a portion of the sound, the second headphone including a speaker unit and releasably connectable to the first headphone (101) by a cable (231, 331), so that sound is generated by use of only the first headphone (101) or generated by use of first and second headphones (101, 201).

2. The cable-connectable stereo headset as claimed in claim 1, wherein each of the first and second headphones (101, 201) includes a housing (110, 210) containing the speaker unit and a headphone frame (120, 220) having a first end coupled to the housing (110, 210) and surrounding at least a part of an outer peripheral surface of the housing with the headphone frame spaced from the housing.

3. The cable-connectable stereo headset as claimed in claim 1, wherein the cable (231) extends from the second headphone (210) and further includes a jack plug (233) installed at an end of the cable and a jack hole (114) formed in the first headphone (101), the jack plug being insertable in to the jack hole.

4. The cable-connectable stereo headset as claimed in claim 1, further comprising a jack plug (333) installed at first and second ends of the cable (331), respectively, and a jack hole (114) formed in each of the first and second headphones (101, 201), the jack plugs being inserted into the jack holes, respectively.

5. The cable-connectable stereo headset as claimed in claim 1, wherein the first headphone (101) is provided with an internal battery and a jack connector for connecting the first headphone to an electric source unit to charge the battery.

6. The cable-connectable stereo headset as claimed in claim 1, wherein the first headphone (101) includes a Bluetooth enabled module (101a) for performing wireless communication with the device for playing a sound medium.

7. The cable-connectable stereo headset as claimed in claim 1, wherein the device for playing the sound medium is an audio component (10), and the first headphone further includes at least one key (111) for playing and stopping the sound medium, controlling a volume of the sound medium and selecting music in the audio component, and a Bluetooth enabled module (101a) for performing wireless local area communication with the audio component.

8. The cable-connectable stereo headset as claimed in claim 1, wherein the device (10) for playing the sound medium is a portable terminal providing a voice communication function, and the first headphone (101) further includes a microphone (116) and a Bluetooth enabled module (101a) and converts a user's voice into electric signals by means of the microphone so as to transmit the electric signals through the Bluetooth enabled module to the portable terminal (10).

9. The cable-connectable stereo headset as claimed in claim 1, wherein the first headphone (101) includes a housing (110) which contains the speaker unit and a transmitter (115) extending from an outer peripheral surface of the housing, with a microphone (116) being located in the transmitter.

10. The cable-connectable stereo headset as claimed in claim 9, wherein the transmitter (115) extends retractably from the housing.

11. The cable-connectable stereo headset as claimed in claim 8, wherein the first headphone further includes an on/off key (112) for starting and ending voice communication.

12. The cable-connectable stereo headset as claimed in claim 8, wherein the first headphone (101) further includes a luminous element (119) which flickers according to an extent of reception of signals transmitted to and received from the portable terminal.
